# EUROPÄISCHE PATENTSCHRIFT

(11) **EP 2 759 657 B1**
(45) Veröffentlichungstag und Bekanntmachung des Hinweises auf die Patenterteilung: **21.09.2016**
(21) Anmeldenummer: 13195693.0
(22) Anmeldetag: 04.12.2013
(51) Int. Cl.: E04G 1/15, E04B 2/88, G01M 3/20, G01M 3/22, G01M 3/32

(54) **Prüfstand für Türen, Fenster und Fassaden**
Test bench for doors, windows and facades
Banc d'essai pour portes, fenêtres et façades

(30) Priorität: 25.01.2013 DE 202013100366 U
(43) Veröffentlichungstag der Anmeldung: 30.07.2014
(73) Patentinhaber: SCHÜCO International KG, 33609 Bielefeld (DE)
(72) Erfinder: Haag, Eugen, 32657 Lemgo (DE); Wagner, Felix, 33818 Leopoldshöhe (DE)
(74) Vertreter: Specht, Peter

(56) Entgegenhaltungen:
- EP-A2- 0 438 649
- JP-A- H06 229 885
- JP-A- H06 331 508
- "Fassadenprüfung, Fensterprüfung, Fassaden, Fassade, ift Rosenheim", , 11. Februar 2010 (2010-02-11), XP054975382, Gefunden im Internet: URL:https://www.youtube.com/watch?v=sqXf9F NMF-M [gefunden am 2014-04-24]
- Michael Wilson: "Unitised Wall System", , 12. April 2012 (2012-04-12), XP054975384, Gefunden im Internet: URL:https://www.youtube.com/watch?v=MMdrpx 2rEGo [gefunden am 2014-04-25]

## Beschreibung

Die vorliegende Erfindung betrifft einen Prüfstand nach dem Oberbegriff des Anspruchs 1, mit dem Eigenschaften von Fassadenelementen, Fassaden, Fenstern und/oder Türen prüfbar sind.

Ein gattungsgemäßer Prüfstand ist von dem Institut: "ift Rosenheim" bekannt. Ein weiterer Prüfstand ist aus der JP H06 331508 A bekannt. Diese beiden Prüfstände bieten nur wenige Elnstellmöglichkeiten. Fassadenelemente, Fassaden, Türen und/oder Fenster sollen vorgegebenen Anforderungen genügen und müssen mithin bestimmte Eigenschaften aufweisen. Solche Eigenschaften sind beispielsweise ihre Dichtigkeit gegen das Eindringen von Luft, Staub und Nässe oder ihre Temperaturdurchlässigkeit. Um diese Eigenschaften zu prüfen, sind aufwendige Aufbauten notwendig, in denen die Fassadenelemente, Fassaden, Türen und/oder Fenster einer Einbausituation entsprechend aufgebaut sind. Um die Eigenschaften reproduzierbar festzustellen, muss ein Prüfraum hergestellt werden, der definierte Ausmaße aufweist, um reproduzierbare Messergebnisse zu liefern, und in dem die Fassadenelemente, Fassaden, Türen und/oder Fenster eingebaut sind. Solche Aufbauten sind zeitaufwendig und kostspielig.

Es ist die Aufgabe der Erfindung, einen wieder verwendbaren Prüfstand zu schaffen, mit dem die Eigenschaften verschiedener Fassadenelemente, Fassaden, Türen und/oder Fenster prüfbar sind, und mit dem der Aufbau einer definierten Einbausituation weniger zeitaufwendig und kostengünstiger möglich ist.

Die Aufgabe wird gelöst mit einem Prüfstand gemäß dem Anspruch 1. Vorteilhafte Ausführungsformen sind den Unteransprüchen zu entnehmen. Dafür wird ein Prüfstand für Fassadenelemente geschaffen, der zumindest einen Prüfraum umfasst. Der Prüfraum weist zwei Seitenwände sowie eine die Seitenwände verbindende Rückwand auf. Die Seitenwände und die Rückwand bilden ein Grundgerüst. Sie erstrecken sich in eine erste Richtung. Das Grundgerüst beziehungsweise die Seitenwände und die Rückwand begrenzen einen Prüfraum zu diesen Seiten hin. Zudem ist es bevorzugt, dass zumindest eine Konsole vorgesehen ist. Die Konsole erstreckt sich in eine zweite Richtung quer zur ersten Richtung und ist zum Befestigen der Fassadenelemente vorgesehen. Sie begrenzen den Prüfraum zudem nach oben und unten hin, ggf. im Zusammenspiel mit einem Boden und einem obersten Deckenabschnitt. Zum Verschieben der Konsole ist an der Rückwand und/oder den Seitenwänden weiterhin jeweils zumindest eine Schiene vorgesehen. Diese Schienen erstrecken sich bevorzugt in die erste Richtung.

Weiterhin bevorzugt sind an der Konsole vorzugsweise zweite und oder dritte Befestigungsmittel angeordnet, die jeweils entlang einer der zweiten Schienen verschieblich sind. Die zweiten und/oder dritten Befestigungsmittel sind ebenfalls bevorzugt abnehmbar an der Konsole angeordnet.

Das Grundgerüst aus den Seitenwänden und der Rückwand ist wieder verwendbar ausgebildet, vorzugsweise ist es fest als Bauwerksteil ausgebildet. Um ein Anpassen des Prüfraums an die jeweiligen Fassadenelemente, insbesondere an die Ausmaße der Fassadenelemente, zu ermöglichen, zeichnet sich der Prüfstand dadurch aus, dass die Konsole an den Seitenwänden und/oder der Rückwand in und gegen die erste Richtung verschieblich befestigt ist. dabei sind an der Konsole vorzugsweise erste Befestigungsmittel zum Befestigen der Fassadenelemente vorgesehen, die relativ zueinander und zu den Seitenwänden in und gegen die zweite Richtung verschieblich sind.

Unter dem Begriff Fassadenelemente sind nicht nur Teile der Fassaden von Gebäuden zu verstehen, sondern auch ein oder mehrere Türen und/oder ein oder mehrere Fenster sowie aus Fenstern, Türen und/oder Fassadenelementen zusammengebaute Fassadenelemente und Fassaden.

Der Prüfstand hat den Vorteil, dass er an die zu prüfenden Fassadenelemente anpassbar und nach Prüfung dieser für weitere Prüfungen anderer Fassadenelemente wieder verwendbar ist. Sie werden an der offenen Frontseite angeordnet und am Prüfstand befestigt. Spalte werden beliebig abgedichtet, vorzugsweise mit Holzzuschnitten und ggf. Dichtmaterial für Fugen.

Die Seitenwände sowie die Rückwand sind bevorzugt aus Stein und/oder Beton hergestellt. Besonders bevorzugt ist das Grundgerüst aus Betonfertigteilen aufgebaut.

Zum Verschieben der Fassadenelemente in die zweite Richtung ist bevorzugt wenigstens eine Schiene vorgesehen. Die Schiene ist bevorzugt an einer von der Rückwand abgewandten Vorderseite der Konsole angeordnet, so dass sie an einer Prüfraum-Vorderseite leicht zugänglich ist. Sie erstreckt sich vorzugsweise in die zweite Richtung. Zudem ist es bevorzugt, dass erste Befestigungsmittel vorgesehen sind, die entlang der Schiene verschieblich sind, und an denen die Fassadenelemente befestigbar sind. Die ersten Befestigungsmittel sind vorzugsweise abnehmbar an der Schiene angeordnet.

Durch die Verschieblichkeit der Konsole ist jede Geschoßhöhe darstellbar. Und die Verschieblichkeit der ersten Befestigungsmittel ermöglicht die Darstellung jeder Breite eines Fassadenelementes.

Bevorzugt sind die Fassadenelemente an den ersten Befestigungsmitteln lösbar befestigt. Dafür sind an den Fassadenelementen weiterhin bevorzugt erste Gegenbefestigungsmittel vorgesehen, mit denen sie an den ersten Befestigungsmitteln befestigbar sind. Besonders bevorzugt sind die ersten Gegenbefestigungsmittel in die ersten Befestigungsmittel einhängbar. Als erste Befestigungsmittel sind beispielsweise Schrauben nutzbar. In dieser Ausführungsform sind die Fassadenelemente unter Verwendung herkömmlicher kostengünstiger Gegenbefestigungsmittel einfach und schnell an der Konsole zu befestigen.

In einer bevorzugten Ausführungsform ist ein Abstand der Konsole von der Rückwand einstellbar. Dafür sind an der Konsole und/oder den zweiten und/oder dritten Befestigungsmitteln Verstellmittel, insbesondere Schienen und/oder Auszüge, vorgesehen.

Die erste Richtung ist eine vertikale Richtung, wobei die zweite Richtung ebenfalls bevorzugt eine horizontale Richtung ist.

Da die erste Richtung die vertikale Richtung ist, ist es bevorzugt, dass das Grundgerüst an einer Grundplatte, insbesondere einem Boden, angeordnet ist. Der Boden ist bevorzugt aus demselben oder einem ähnlichen Material wie das Grundgerüst gebildet. In Abhängigkeit von den Ausmaßen der zu prüfenden Fassadenelemente ist der Prüfstand verschiebbar ausbildbar. In dieser Ausführungsform ist die Grundplatte Bestandteil des Grundgerüstes und das Grundgerüst mit seiner Grundplatte verschiebbar.

In einer bevorzugten Ausführungsform bildet die Konsole ein Dachelement. Sofern sie ein Dachelement bildet, begrenzt sie den Prüfraum ebenfalls. Es ist aber ebenfalls bevorzugt, ein separates Dachelement, welches insbesondere an den zweiten Schienen der Seitenwände und/oder Rückwand festgelegt ist, oder, je nach Anforderungen der Prüfung, kein Dachelement vorzusehen. Ebenfalls bevorzugt bildet die Konsole eine Zwischendecke.

Weiterhin ist es bevorzugt, dass im Prüfraum mehrere Konsolen angeordnet sind. In dieser Ausführungsform sind auch die weiteren Konsolen bevorzugt entlang der zweiten Schienen in die erste Richtung verschieblich. Daher sind sie zueinander verschieblich. Daher sind Fassadenelemente verschiedenen Ausmaßes jeweils an den befestigbar.

Um die Montage zu vereinfachen, sind die Konsolen bevorzugt begehbar ausgebildet. Diese Ausbildung der Konsolen bietet dem Monteur eine große Sicherheit.

Zudem ist es bevorzugt, dass an einer von der Rückwand abgewandten Frontseite einer Seitenwand eine dritte Schiene vorgesehen ist, an der Fassadenelemente in und gegen die erste Richtung verschieblich befestigbar sind.

In einer besonders bevorzugten Ausführungsform umfasst der Prüfstand mehrere nebeneinander angeordnete Prüfräume. Dadurch ist entweder ein sehr großes Fassadenelement oder sind mehrere kleine Fassadenelemente gleichzeitig prüfbar.

Zwischen zwei benachbarten Prüfräumen ist weiterhin bevorzugt eine Druckausgleichskammer vorgesehen, die das Prüfen eines solchen großen Fassadenelementes, welches sich über mehr als eine Prüfkammer erstreckt, ermöglicht.

Nachfolgend wird die Erfindung unter Bezug auf die Zeichnungen anhand von Ausführungsbeispielen näher erläutert, wobei weitere Vorteile der Erfindung deutlich werden. Es zeigt:
- Fig. 1a-c: einen Prüfstand mit drei Prüfkammern mit eingelegten Konsolen in einer Frontansicht, ein Grundgerüst eines Prüfstandes mit drei Prüfkammern in einer perspektivischen Ansicht, und einen Schnitt durch eine Prüfkammer mit eingelegten Konsolen;
- Fig. 2a, b: eine Draufsicht auf eine in einer Prüfkammer angeordnete Konsole und einen Ausschnitt aus einer mittels einem zweiten Befestigungsmittel an einer Rückwand befestigten Konsole; und
- Fig. 3a-d: einen Schnitt durch eine Konsole, den Schnitt der Fig. 3(a) ausschnittsweise vergrößert, und in jeweils einen Tragrahmen für eine Konsole von oben und von unten; und
- Fig. 4: eine perspektivische Ansicht eines Befestigungsmittels.

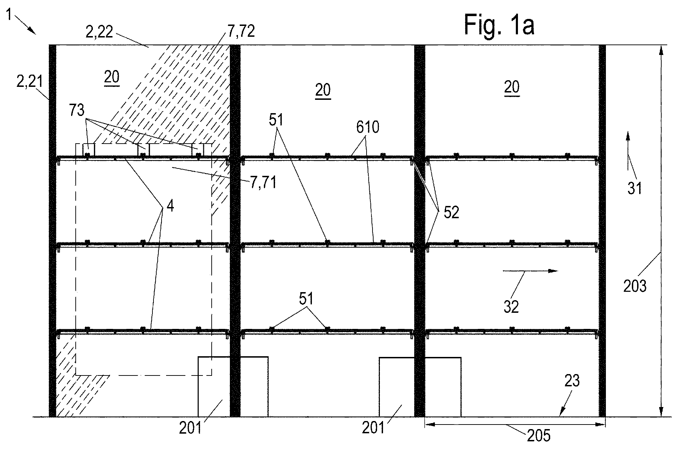

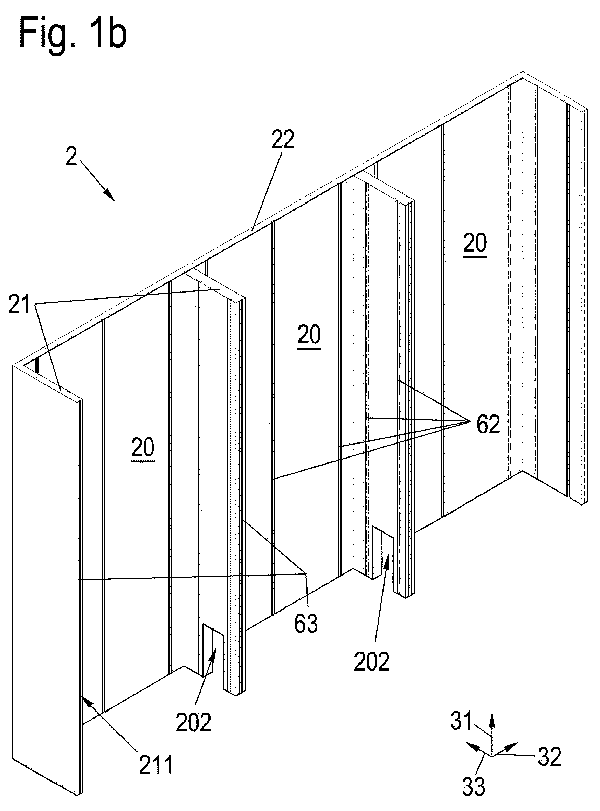

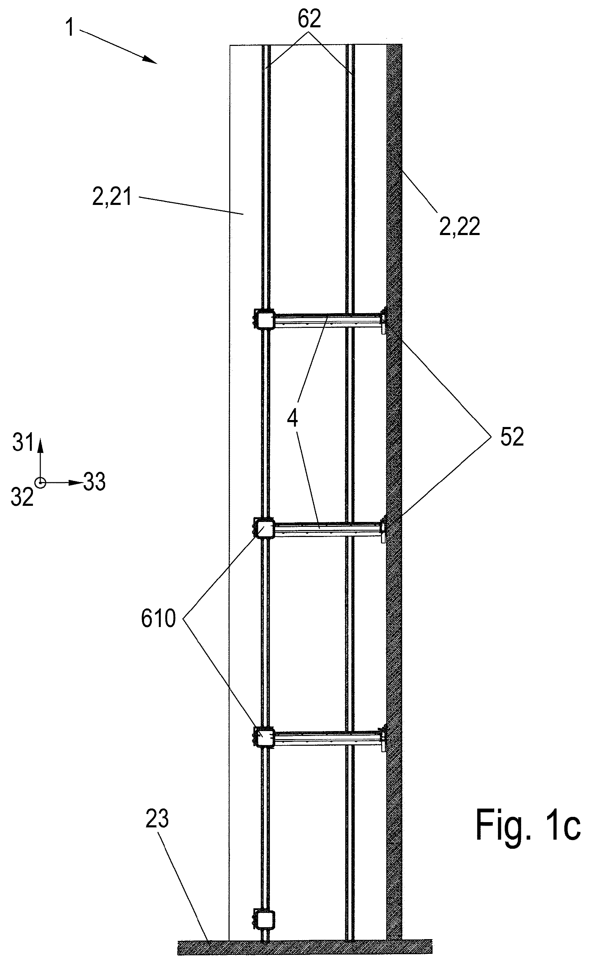

Der Prüfstand 1 der Fig. 1 a weist ein Grundgerüst 2 mit vier Seitenwänden 21 und einer Rückwand 22, die die Seitenwände 21 miteinander verbindet, auf. Die Seitenwände 21 und die Rückwand 22 erstrecken sich in eine erste vertikale Richtung 31. Sie sind am Boden 23 festgelegt, der sich in eine zweite horizontale Richtung 32 erstreckt.

Die Seitenwände 21 trennen drei nebeneinander angeordnete Prüfkammern 20 voneinander.

Um einen Druckausgleich zwischen den Prüfkammern 20 zu ermöglichen, ist in den beiden mittleren Seitenwänden 21 jeweils eine Durchgangsöffnung 202 (s. Fig. 1 b) vorgesehen. Die Durchgangsöffnung 202 ist durch eine mittels einer Tür (nicht gezeigt) oder Klappe (nicht gezeigt) verschließbare Druckausgleichskammer 201 zugänglich, die hier nur schematisch gezeigt ist.

In jeder der Prüfkammern 20 sind hier in praktischer und bevorzugter (aber nicht zwingender) Ausgestaltung jeweils drei Konsolen 4 in der ersten Richtung 31 übereinander angeordnet. Die Konsolen 4 erstrecken sich parallel der zweiten Richtung 32 jeweils zwischen zwei Seitenwänden 21.

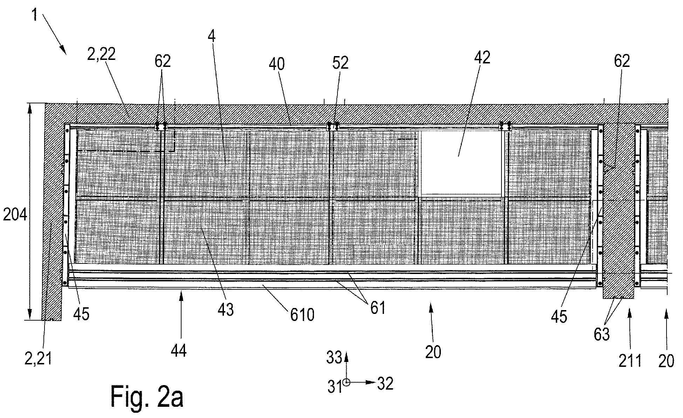

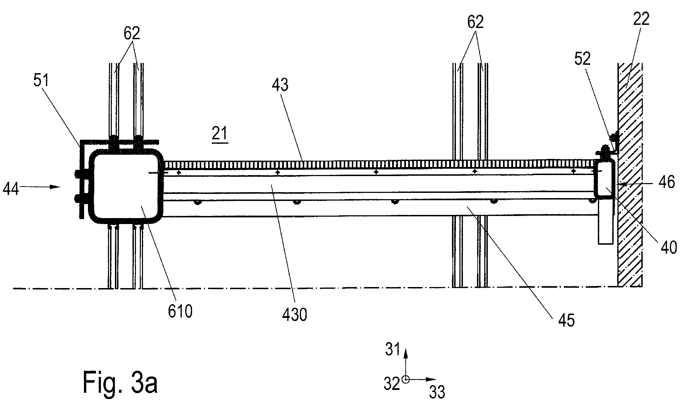

Um Fassadenelemente 7 oder dgl. an den Konsolen 4 befestigen zu können, sind erste Befestigungselemente 51 an den Konsolen angeordnet. Die ersten Befestigungselemente 51 sind entlang einer ersten Schiene 61 (s. Fig. 2(a), 3(a)) in und gegen die zweite Richtung 32 verschieblich. In dieser Fig. 1 (a) sind jeweils erste Schienenträger 610 für die ersten Schienen 61 gezeigt. Diese Schienenträger sind vorzugsweise rohrartig oder profilartig ausgebildet, insbesondere als Rechteckrohr, welches an einer oder mehreren Seiten vorteilhaft die Schienen aufweisen kann.

Zudem sind die Konsolen 4 in die erste Richtung 31 höhenverstellbar vorgesehen. Dafür sind an den Seitenwänden 21 jeweils zweite Schienen 62 (s. Fig. 1 (b)) angeordnet, die sich in die erste Richtung 31 erstrecken. Die Konsolen 4 sind mittels zweiten Befestigungsmitteln 52, die entlang der zweiten Schienen 62 in und gegen die erste Richtung 31 verschieblich sind, an den Seitenwänden 21 befestigt.

In der Fig. 1 (a) ist in einem der Prüfräume 20 beispielhaft schematisch ein Fassadenelement 7 mittels gestrichelter Linien angedeutet. Das Fassadenelement 7 ist aus einem Fenster oder einer Tür 71 gebildet, sowie weiteren Teilen wie weitere Fassadenelementen 72 oder Holzverkleidungen, die das Fenster oder die Tür 71 umgeben und den eigentlichen Prüfraum für diesen prüfversuch begrenzen.

Bei der Montage wird zunächst das Fenster oder die Tür 71 mittels ersten Gegenbefestigungsmitteln73, die hier schematisch gezeigt sind, an den ersten Befestigungsmitteln 51 befestigt. Anschließend werden Abdeckungen und ggf. die (Teil-) Fassadenelemente 72 an dem Fenster oder der Tür 71 und/oder den Seitenwänden 21 befestigt. Zur Befestigung der (Teil-) Fassadenelemente 71 werden bevorzugt die ersten Befestigungsmittel 51, die zweiten Schienen 62 und/oder weitere dritte Schienen 63 genutzt.

In dem hier gezeigten Ausführungsbeispiel erstreckt sich das Fassadenelement 7 über eine Höhe 203 des Prüfraums 20. Prinzipiell sind aber auch Prüfungen von Fassadenelementen 7 möglich, die sich nur über einen Teil der Höhe 203 des Prüfraums 20 erstrecken. Ggf. verbleibende Freiräume können mit Holzelementen verschlossen werden (beispielsweise im Bereich 72).

Fig. 1 (b) zeigt ein Grundgerüst 2 einer weiteren Ausführungsform eines Prüfstandes 1 mit drei Prüfkammern 20.

Auch hier weist das Grundgerüst 2 vier Seitenwände 21 und die diese verbindende Rückwand 22 auf. Weiterhin erstreckt sich auch dieses Grundgerüst 2 in die erste, vertikale Richtung 31. Und auch hier ist in den mittleren Seitenwänden 21 jeweils eine Durchgangsöffnung 202 für den Druckausgleich zwischen den Prüfkammern 20 vorgesehen.

Bei diesem Grundgerüst 2 sind neben den zweiten zur höhenverschieblichen Befestigung der Konsolen 4 vorgesehenen Schienen 62 an den Seitenwänden 21 weitere zweite Schienen 62 an der Rückwand 22 vorgesehen. Die an der Rückwand 22 vorgesehenen zweiten Schienen 62 erstrecken sich ebenfalls in die erste Richtung 31. Sie sind zur verschieblichen Befestigung der Konsole 4 in und gegen die erste Richtung 31 vorgesehen.

Zudem sind an einer der Rückwand 22 abgewandten Frontseite 211 der Seitenwände 21 jeweils dritte Schienen 63 zur Befestigung von Fassadenelementen 7 vorgesehen. Die dritten Schienen 63 erstrecken sich analog den zweiten Schienen 62 in die erste Richtung 31.

Der Prüfstand 1, den das Schnittbild der Fig. 1 (c) zeigt, weist an den Seitenwänden 21 die zweiten Schienen 62 auf. Zudem weist er an der Rückwand 22 zweite Schienen 62 auf. Sichtbar sind hier aber nur die zweiten Befestigungsmittel 52, mit denen die Konsolen 4 jeweils an den zweiten Schienen 62 der Rückwand 22 befestigt sind.

Die Seitenwände 21 dieses Prüfstandes 1 sowie die Rückwand 22 sind an einer Grundplatte 23 angeordnet.

Sichtbar ist zudem, dass der Schienenträger 610 für die erste Schiene 61 als quaderförmiges Vierkantrohr ausgebildet ist.

Fig. 2(a) zeigt einen Blick von oben auf eine in einem Prüfraum 20 angeordnete Konsole 4. Der Prüfraum 20 ist einer von mehreren nebeneinander angeordneten Prüfräumen 20 eines Prüfstandes 1, von dem hier nur ein Ausschnitt gezeigt ist, so dass von einem zweiten Prüfraum 20 nur ein Teil sichtbar ist.

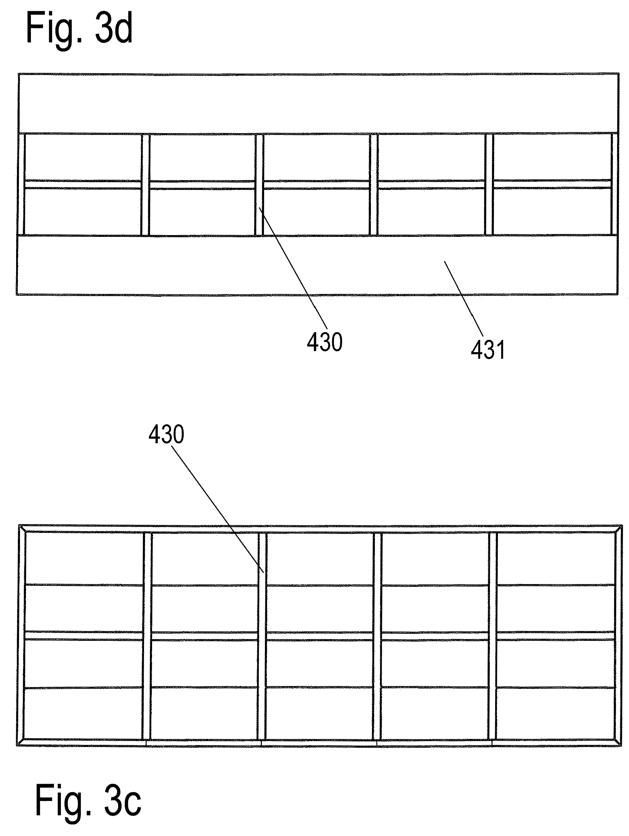

Die Konsole 4 weist einen ebenen Konsolenboden 43 auf, der hier durch ein Gitterrost gebildet ist, das auf einem gitterförmig ausgebildeten Trägergerüst 430 (s. Fig. 3 (c), (d)) aufliegt. Für einen Bediener ist eine rechteckige Durchgangsöffnung 42 im Trägergerüst 430 sowie dem Konsolenboden 43 ausgespart, so dass dieser den Konsolenboden 43 durch die Durchgangsöffnung 42 hindurch betreten kann.

An einer der Rückwand 22 abgewandten Vorderseite 44 der Konsole 4 ist der Schienenträger 610 mit hier zwei ersten Schienen 61 zur Befestigung der Fassadenelemente 7 angeordnet.

Für eine Befestigung von Fassadenelementen 7 oder die Fassadenelemente einfassenden Verkleidungen insbesondere aus Holz sind an den Seitenwänden 21 können an deren Frontseite 211 dritte Schienen 63 vorgesehen sein.

Die Konsole 4 ist mittels zweiten Befestigungsmitteln 52 an den zweiten Schienen 62 der Rückwand 22 befestigt. Für die Befestigung der Konsole 4 an den zweiten Schienen 62 der Seitenwände 21 sind Seitenträger 45 vorgesehen.

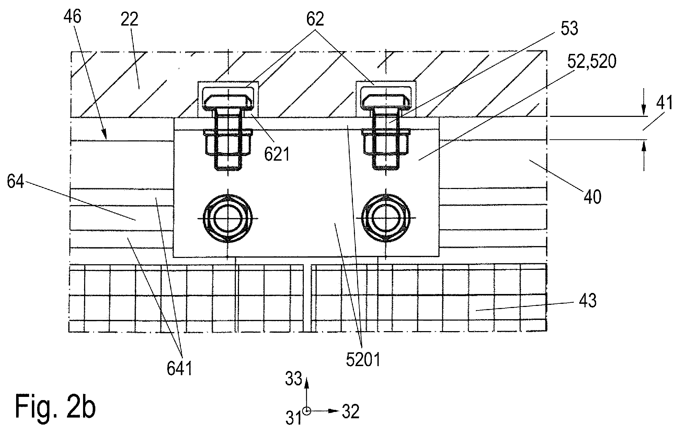

Die Fig. 2(b) zeigt einen vergrößerten Ausschnitt aus der Fig. 2(a), in dem die Befestigung der Konsole 4 an den zweiten Schienen 62 der Rückwand 22 detailliert dargestellt ist.

An einer der Rückwand 22 zugewandten Rückseite 46 der Konsole ist ein Konsolenträger 40 angeordnet, der bevorzugt als Vierkantrohr ausgebildet ist. Am Konsolenträger 40 ist eine vierte Schiene 64 vorgesehen, die sich in die zweite Richtung 32 erstreckt.

Sichtbar ist hier, dass die zweiten, sich in die erste Richtung erstreckenden Schienen 62 in die Rückwand 22 eingelassenen sind. Sie sind durch eine Nut gebildet. Die zweiten Schienen 62 weisen beidseitig zwei hintergreifbare Kanten 621 auf. Auch die weiteren am Grundgerüst 2 vorgesehenen Schienen 61, 63 des Prüfstandes 1 sind bevorzugt so ausgebildet. Vorzugsweise werden als Schienen 61 - 64 sogenannte "Halfeschienen" verwendet. Zudem sind die an der Konsole vorgesehenen Schienen 64 ebenfalls bevorzugt als Nuten ausgebildet, um mit Schrauben 521 arbeiten zu können.

Das zweite Befestigungsmittel 52 umfasst einen Winkelträger 520 mit zwei rechtwinkelig zueinander angeordneten Schenkeln 5201, in denen jeweils zwei Durchgangsbohrungen (nicht weiter bezeichnet) angeordnet sind. Dabei ist einer der Schenkel 5201 zur Befestigung an der Rückwand 22 vorgesehen, wobei der andere Schenkel 5201 zur Befestigung an der Konsole 4 vorgesehen ist. Durch die Durchgangsöffnungen sind Schrauben 521, die hier als Sechskantschrauben ausgebildet sind, hindurch geführt. Die Schrauben 521 sind in die zweiten und die vierte Schiene 62, 64 eingelegt, so dass sie die Kanten 621, 641 hintergreifen.

Bei angezogenen Schraubmuttern ist die Konsole 4 unverschieblich an der Rückwand 22 befestigt. Bei nicht angezogenen Schraubmuttern ist sie entlang der zweiten Schienen 62 in und gegen die erste Richtung 31 und/oder entlang der vierten Schiene 64 zumindest geringfügig in und gegen die zweite Richtung 32 verschieblich. Dabei ist die Verschieblichkeit der Konsole 4 in und gegen die zweite Richtung 32 hier zur Vereinfachung der Montage der Konsole 4 vorgesehen. Außerdem ist die Konsole 4 bei dieser Befestigung leicht vom zweiten Befestigungsmittel 52 lösbar und austauschbar. Zudem ist der Winkelträger 520 des zweiten Befestigungsmittels 52 bei dieser Befestigung leicht austauschbar.

Die hier dargestellte Befestigung der Konsole 4 an der Rückwand 22 ermöglicht keine Veränderung des Abstandes 41 der Konsole 4 von der Rückwand 22 in und gegen eine dritte Richtung 33. Eine solche Veränderbarkeit ist aber beispielsweise durch Verwendung von Schrauben 521 mit langer Gewindestange realisierbar.

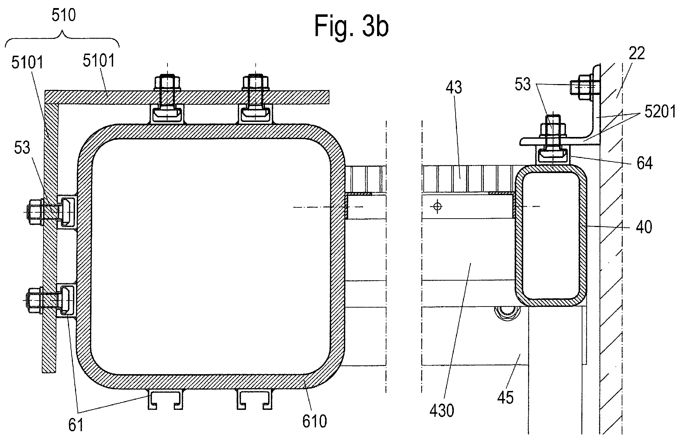

Die Fig. 3(a) zeigt einen Schnitt durch die Konsole 4, der in Fig. 3(b) ausschnittsweise vergrößert dargestellt ist.

An der der Rückwand 22 zugewandten Rückseite 46 der Konsole 4 ist der Konsolenträger 40 gezeigt, der mittels des zweiten Befestigungsmittels 52 an den zweiten Schienen 62 in der Rückwand 22 befestigt ist. Sichtbar ist hier, dass die vierte Schiene 64 zwar die Nut mit den hintergreifbaren Kanten aufweist, aber nicht im sondern am Konsolenträger 40 angeordnet, beispielsweise angeschweißt, ist. Zudem ist zumindest ein Teil des Seitenträgers 45 sichtbar, mit dem die Konsole 4 an den zweiten Schienen 62 der Seitenwände 21 befestigt ist. Sichtbar ist außerdem der Konsolenboden 43, der hier auf dem gitterförmigen Trägergerüst 430 aufliegt.

An der von der Rückwand 22 abgewandten Vorderseite 44 ist der Schienenträger 610 gezeigt. Am Schienenträger 610 ist das erste Befestigungsmittel 51 befestigt, an dem die Fassade, Fassadenelemente, Türen und/oder Fenster 7 befestigbar sind.

Das erste Befestigungsmittel 51 umfasst ebenfalls den Winkelträger 510 mit zwei rechtwinkelig zueinander angeordneten Schenkeln 5101, in denen Durchgangsbohrungen (nicht weiter bezeichnet) vorgesehen sind.

Die ersten Schienen 61 sind oberhalb, unterhalb und an der Vorderseite 44 der Konsole 4 am Schienenträger 610 angeordnet. Dargestellt ist eine Befestigung des Winkelträgers 510 an den oberseitigen und vorderseitigen ersten Schienen 61. Denkbar ist aber auch eine Befestigung an den unterseitigen und vorderseitigen ersten Schienen 61, oder ein Lösen des ersten Befestigungsmittels 51, sodass die Fassadenelemente 7 unmittelbar an ersten Schienen 61 befestigt werden, oder eine Befestigung an einem oder beiden oberseitigen oder vorderseitigen oder unterseitigen ersten Schienen 61.

Die Fig. 3(c) und (d) zeigen das Trägergerüst 430, auf dem der Konsolenboden 43 aufliegt. Das Trägergerüst 430 ist erforderlich, um das Gewicht der Fassadenelemente 7 zu tragen. An der Unterseite, die die Fig. 3(d) zeigt, sind Verstärkungsplatten 431 sichtbar, die die Steifigkeit des Trägergerüstes 430 beziehungsweise der Konsole 4 erhöhen. Es können noch weitere Verstärkungselemente (nicht gezeigt) vorgesehen sein.

Der Prüfstand 1 weist in Abhängigkeit von den geprüften Fassadenelementen 7 vorzugsweise eine Tiefe 204 (s. Fig. 2(a)) von etwa 1,5 - 2 Metern und vorzugsweise eine Höhe 203 von 12 - 15 Metern, so dass eine Geschosshöhe von 4 - 5 Metern darstellbar ist, und eine Breite 205 von 6 - 8 Metern für jeden Prüfraum 20 auf.

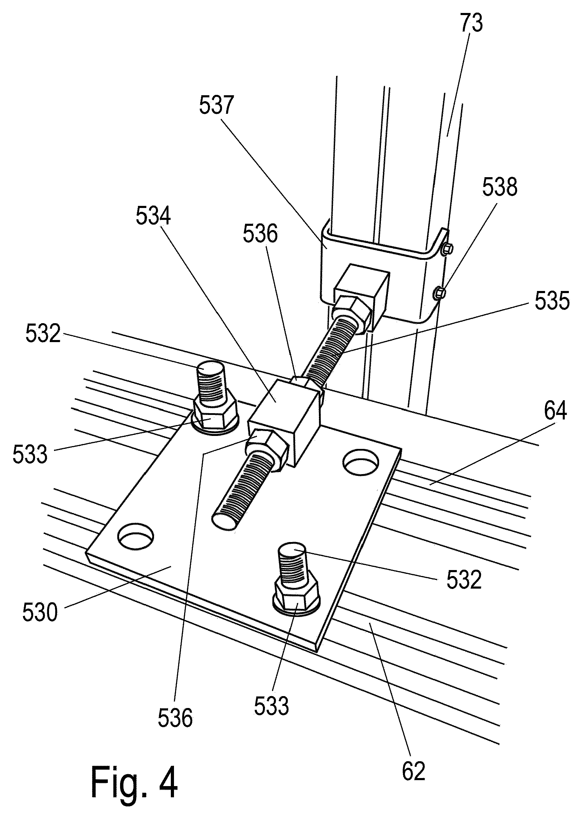

Ein vorteilhaftes drittes Befestigungsmittel für Fassadenelemente oder dgl. zeigt schließlich noch die Fig. 4. Das zweite Befestigungsmittel 53 umfasst eine Platte 530 mit vier Durchgangsbohrungen 531. Durch die Durchgangsöffnungen 531 sind Schrauben 532, die hier als Sechskantschrauben ausgebildet sind, hindurch geführt. Die Schrauben 532 sind in die Schienen 62, 64 eingelegt, so dass sie deren Kanten hintergreifen. Muttern 533 dienen zur Befestigung bzw. Festlegung der Platte 530 an der Schiene. Auf der Platte 530 ist - hier durch Schweißen - ein Klotz 534 mit einer Bohrung festgelegt, die von einem Gewindebolzen 535 durchsetzt ist, der sich senkrecht zu der Schiene erstreckt und der vor den Rand der Konsole vorragt. Mittels Muttern 536 ist der relativ lange Gewindebolzen 535 an dem Klotz 534 verstellbar fixierbar. An dem freien Ende des Gewindebolzens, das vor den Rand der Konsole vorragt, ist eine Befestigungseinrichtung ausgebildet, hier z.B. eine Art u-förmige Gabel 537 zum Anlehnen eines Profils 73 einer Fassade oder dgl, wobei dieses Profil 73 wiederum mit weiteren Schrauben 538 an der Gabel 537 festgelegt sein kann. Diese Art des dritten Befestigungsmittels ist einfach aufgebaut, robust und schnell einsetzbar, wobei auch eine Wiederverwendung problemlos möglich ist.

Insgesamt können derart gut Wind-Wasser und weitere Prüfungen durchgeführt werden, insbesondere, um die Umweltbedingungen beim späteren Einsatz am Bauwerk zu simulieren.

### Bezugszeichenliste

- 1: Prüfstand
- 2: Grundgerüst
- 20: Prüfraum
- 201: Druckausgleichskammer
- 202: Durchgangsöffnung
- 203: Höhe des Prüfraums/ Prüfstandes
- 204: Tiefe des Prüfstandes
- 205: Breite
- 21: Seitenwand
- 211: Frontseite der Seitenwand
- 22: Rückwand
- 23: Grundplatte, Boden
- 31: Erste Richtung, vertikale Richtung
- 32: Zweite Richtung, horizontale Richtung
- 33: Dritte Richtung
- 4: Konsole
- 40: Konsolenträger
- 41: Abstand der Konsole von der Rückwand
- 42: Durchgangsöffnung
- 43: Konsolenboden
- 430: Trägergerüst
- 431: Verstärkungsplatten
- 44: Vorderseite der Konsole
- 45: Seitenträger
- 46: Rückseite der Konsole
- 51: Erste Befestigungsmittel
- 52: Zweite Befestigungsmittel
- 53: Dritte Befestigungsmittel
- 520: Winkelträger
- 5201: Schenkel des Winkelträgers
- 521: Schrauben
- 530: Platte
- 531: Durchgangsbohrungen
- 532: Schrauben
- 533: Muttern
- 534: Klotz
- 535: Gewindebolzen
- 536: Muttern
- 537: Gabel
- 538: Mutter
- 61: Erste Schiene
- 610: Schienenträger
- 62: Zweite Schiene
- 621: Hintergreifbare Kante
- 63: Dritte Schiene
- 64: Vierte Schiene
- 641: Hintergreifbare Kante
- 7: Fassade, Fassadenelement
- 71: Fenster, Tür
- 72: (Teil-) Fassadenelement
- 73: Profil

## Patentansprüche

1. Prüfstand (1) für Fassadenelemente, der zumindest einen Prüfraum (2) umfasst, mit zwei Seitenwänden (21) und einer die Seitenwände (21) verbindenden Rückwand (22), die ein Grundgerüst (2) bilden, die sich in eine erste Richtung (31) erstrecken und die den Prüfraum (20) begrenzen, wobei zumindest eine Konsole (4) zum Befestigen der Fassadenelemente (7) vorgesehen ist, die sich in eine zweite Richtung (32) quer zur ersten Richtung (31) erstreckt, wobei an der wenigstens einen Konsole (4) zumindest erste und ggf. weitere Befestigungsmittel (51) zum Befestigen der Fassadenelemente (7) vorgesehen sind, und wobei die erste Richtung (31) eine vertikale Richtung und die zweite Richtung (32) eine horizontale Richtung ist, **dadurch gekennzeichnet, dass**
- Z r an der wenigstens einen Konsole (4) wenigstens eine erste Schiene (61) zum Verschieben der ersten Befestigungsmittel (51) vorgesehen ist, und die ersten und ggf. weiteren Befestigungsmittel relativ zueinander und zu den Seitenwänden (21) in und gegen die zweite Richtung (32) verschieblich sind, und
- die wenigstens eine Konsole (4) an den Seitenwänden (21) und/oder der Rückwand (22) in und gegen die erste Richtung (31) verschieblich befestigt ist, wozu an der Rückwand (22) und/oder den Seitenwänden (21) zumindest zwei zweite Schienen (62) zum Verschieben der wenigstens einen Konsole (4) vorgesehen sind.

2. Prüfstand (1) nach Anspruch 1, **dadurch gekennzeichnet, dass** zumindest eine der Konsolen als Dachelement vorgesehen ist und den Prüfraum (20) begrenzt.

3. Prüfstand (1) nach einem der vorherigen Ansprüche, **dadurch gekennzeichnet, dass** ein Abstand (41) der Konsole (4) zur Rückwand (22) einstellbar ist.

4. Prüfstand (1) nach einem der vorherigen Ansprüche, **dadurch gekennzeichnet, dass** er die eine oder mehrere Konsolen (4) umfasst, welche begehbar ausgebildet ist/sind.

5. Prüfstand (1) nach einem der vorherigen Ansprüche, **dadurch gekennzeichnet, dass** er mehrere nebeneinander angeordnete Prüfräume (2) umfasst, wobei vorzugsweise zwischen zwei benachbarten Prüfräumen (2) eine Druckausgleichskammer (201) vorgesehen ist.

6. Prüfstand (1) nach einem der vorherigen Ansprüche, **dadurch gekennzeichnet, dass** die Fassadenelemente lösbar an den ersten Befestigungsmitteln (51) befestigbar sind, insbesondere einhängbar.

7. Prüfstand (1) nach einem der vorherigen Ansprüche, **dadurch gekennzeichnet, dass** die Schienen als Halfeschienen ausgebildet sind, wobei insbesondere an den Halfeschienen die Befestigungsmittel mittels Schrauben und Muttern festlegbar sind.

8. Prüfstand (1) nach einem der vorherigen Ansprüche, **dadurch gekennzeichnet, dass** wenigstens eine der Konsolen wenigstens einen Schienenträger (610) aufweist, der bevorzugt als Vierkantrohr ausgebildet ist, wobei an dem Schienenträger an einer oder mehreren Seiten eine oder mehrere der Schienen ausgebildet ist/sind.

9. Prüfstand (1) nach einem der vorherigen Ansprüche, **dadurch gekennzeichnet, dass** wenigstens eine der Konsolen wenigstens einen Konsolenträger (40) vorzugsweise an der vom Schienenträger abgewandten Seite aufweist, der bevorzugt als Vierkantrohr ausgebildet ist, wobei an dem Konsolenträger (40) an einer oder mehreren Seiten eine oder mehrere der Schienen ausgebildet ist/sind.

10. Prüfstand (1) nach einem der vorherigen Ansprüche, **dadurch gekennzeichnet, dass** an die Befestigungsmittel wenigstens eine Platte aufweisen, die mittels der Schrauben und der Muttern an der oder den Schienen festlegbar sind.

11. Prüfstand (1) nach einem der vorherigen Ansprüche, **dadurch gekennzeichnet, dass** das Grundgerüst (2) an einer Grundplatte, insbesondere einem Boden, angeordnet, insbesondere befestigt, ist.

12. Prüfstand (1) nach einem der vorherigen Ansprüche, **dadurch gekennzeichnet, dass** die Befestigungsmittel eine Gabel (537) zum Anlehnen eines Profils P einer Fassade oder dgl. aufweisen, wobei dieses Profil P wiederum mit weiteren Schrauben (538) an der Gabel (537) festlegbar ist.

## Claims

1. A test stand (1) for facade elements, which comprises at least one test chamber (2), having two side walls (21) and a rear wall (22) connecting the side walls (21), which form a base frame (2) and which extend in a first direction (31) and delimit the test chamber (20), wherein at least one console (4) is provided for fastening the facade elements (7), which extends in a second direction (32) transversely to the first direction (31), wherein at least first and optionally further fastening means (51) are provided on the at least one console (4) for fastening the facade elements (7), and wherein the first direction (31) is a vertical direction and the second direction (32) is a horizontal direction, **characterized in that**
- at least one first rail (61) is provided on the at least one console (4) for displacing the first fastening means (51), and the first and optionally further fastening means are displaceable relative to each other and to the side walls (21) in and against the second direction (32), and
- the at least one console (4) is fastened to the side walls (21) and/or the rear wall (22) in and against the first direction (31), for which purpose at least two second rails (62) are provided on the rear wall (22) and/or the side walls (21) for displacing the at least one console (4).

2. A test stand (1) according to claim 1, **characterized in that** at least one of the consoles is provided as a roof element and delimits the test chamber (20).

3. A test stand (1) according to one of the preceding claims, **characterized in that** a distance (41) of the console (4) from the rear wall (22) is adjustable.

4. A test stand (1) according to one of the preceding claims, **characterized in that** it comprises one or several consoles (4) which are formed in an accessible manner.

5. A test stand (1) according to one of the preceding claims, **characterized in that** it comprises several test chambers (2) arranged adjacent to each other, wherein a pressure compensation chamber (201) is preferably provided between two adjacent test chambers (2).

6. A test stand (1) according to one of the preceding claims, **characterized in that** the facade elements can detachably be fastened to the first fastening means (51), especially in a suspendable manner.

7. A test stand (1) according to one of the preceding claims, **characterized in that** the rails are formed as Halfen rails, wherein especially the fastening means can be fixed by means of screws and nuts to the Halfen rails.

8. A test stand (1) according to one of the preceding claims, **characterized in that** at least one of the consoles comprises at least one of the rail carriers (610), which is preferably formed as a square tube, wherein one or several of the rails are formed on the rail carrier on one or several sides.

9. A test stand (1) according to one of the preceding claims, **characterized in that** at least one of the consoles comprises at least one console carrier (40) preferably on the side facing away from the rail carrier, which is preferably formed as a square tube, wherein one or several of the rails are formed on the console carrier (40) on one or several sides.

10. A test stand (1) according to one of the preceding claims, **characterized in that** the fastening means comprise at least one plate, which can be fixed by means of the screws and the nuts on the rail or rails.

11. A test stand (1) according to one of the preceding claims, **characterized in that** the base frame (2) is arranged on, and especially fastened to, a base plate, especially a bottom.

12. A test stand (1) according to one of the preceding claims, **characterized in that** the fastening means comprise a fork (537) for leaning a profile P of a facade or the like thereon, wherein said profile P can further be fixed with further screws (538) to the fork (537).

## Revendications

1. Installation d'essai (1) pour éléments de façades comprenant au moins un espace d'essai (2) avec deux parois latérales (21) et une paroi arrière (22) pouvant être assemblée aux parois latérales (21), qui forment un bâti de base (2), qui s'étendent dans une première direction (31) et qui délimitent l'espace d'essai (20), dans laquelle au moins une console (4) est prévue pour fixer les éléments de façade (7), laquelle s'étend dans une deuxième direction (32) perpendiculaire à la première direction (31), au moins des premiers et éventuellement d'autres moyens de fixation (51) étant prévus sur l'au moins une console (4) pour la fixation des éléments de façade (7), et dans laquelle la première direction (31) est une direction verticale et la deuxième direction (32) une direction horizontale,
**caractérisée en ce que**
- il est prévu sur l'au moins une console (4) au moins un premier rail (61) pour la translation des premiers moyens de fixation (51) et les premiers et éventuellement les autres moyens de fixation sont capables de translation les uns par rapport aux autres et par rapport aux parois latérales (21) dans la deuxième direction (32) et en sens inverse, et
- l'au moins une console (4) est fixée sur les parois latérales (21) et/ou la paroi arrière (22) avec possibilité de translation dans la première direction (31) et en sens inverse, ce pour quoi au moins deux deuxièmes rails (62) sont prévus sur la paroi arrière (22) et/ou les parois latérales (21) en vue de la translation de l'au moins une console (4).

2. Installation d'essai (1) selon la revendication 1, **caractérisée en ce qu'**au moins une des consoles est prévue pour servir d'élément de toit et délimite l'espace d'essai (20).

3. Installation d'essai (1) selon l'une des revendications précédentes,
**caractérisée en ce qu'**une distance (41) entre la console (4) et la paroi arrière (22) est réglable.

4. Installation d'essai (1) selon l'une des revendications précédentes,
**caractérisée en ce qu'**elle comprend une ou plusieurs consoles (4) qui sont conçues pour que l'on puisse marcher dessus.

5. Installation d'essai (1) selon l'une des revendications précédentes,
**caractérisée en ce qu'**elle comprend plusieurs espaces d'essai (2) juxtaposés, un sas d'équilibrage de la pression (201) étant de préférence prévu entre deux espaces d'essai (2) contigus.

6. Installation d'essai (1) selon l'une des revendications précédentes,
**caractérisée en ce que** les éléments de façade peuvent être fixés de manière amovible, de préférence accrochés, aux premiers moyens de fixation (51).

7. Installation d'essai (1) selon l'une des revendications précédentes,
**caractérisée en ce que** les rails sont conformés comme des rails à profilé Halfen, les moyens de fixation pouvant en particulier être fixés aux rails à profilé Halfen au moyen de vis et d'écrous.

8. Installation d'essai (1) selon l'une des revendications précédentes,
**caractérisée en ce qu'**au moins une des consoles présente au moins un support de rails (610) conformé de préférence comme un tube carré, un ou plusieurs des rails étant formés sur une ou plusieurs faces du support de rails.

9. Installation d'essai (1) selon l'une des revendications précédentes,
**caractérisée en ce qu'**au moins une des consoles présente au moins, de préférence sur la face opposée au support de rails, un support de console (40) qui est de préférence conformé comme un tube carré, un ou plusieurs des rails étant formés sur une ou plusieurs faces du support de console (40).

10. Installation d'essai (1) selon l'une des revendications précédentes,
**caractérisée en ce que** les moyens de fixation présentent au moins une plaque qui peut être fixée sur le ou les rails au moyen de vis et d'écrous.

11. Installation d'essai (1) selon l'une des revendications précédentes,
**caractérisée en ce que** le bâti de base (2) est disposé, en particulier fixé, sur une plaque de base, en particulier un fond.

12. Installation d'essai (1) selon l'une des revendications précédentes,
**caractérisée en ce que** les moyens de fixation comprennent une fourche (537) pour appuyer un profilé (P) d'une façade ou similaire, lequel profilé (P) peut à son tour être fixé à la fourche (537) par d'autres vis (538).
